# FASCICULE DE BREVET EUROPEEN

(11) **EP 1 666 751 B1**
(45) Date de publication et mention de la délivrance du brevet: **31.12.2008**
(21) Numéro de dépôt: 05111254.8
(22) Date de dépôt: 24.11.2005
(51) Int. Cl.: F16D 13/71, F16D 13/58

(54) **Embrayage, notamment pour véhicule automobile, de type comportant un mécanisme comprenant un couvercle perfectionné.**
Kupplung, insbesondere für Kraftfahrzeuge, umfassend einen Mechanismus mit verbessertem Kupplungsgehäuse.
Clutch, in particular for automotive vehicle, comprising a mechanism having an improved clutch housing

(30) Priorité: 06.12.2004 FR 0452877
(43) Date de publication de la demande: 07.06.2006
(73) Titulaire: Valeo Embrayages, 80009 Amiens Cedex (FR)
(72) Inventeur: Lopez-Perez, M. Carlos, 28005, MADRID (ES)
(74) Mandataire: Vignesoult, Serge L. M.

(56) Documents cités:
- DE-A1- 19 926 383
- FR-A- 2 780 462
- US-A- 5 730 267
- US-A1- 2004 069 588

## Description

La présente invention concerne un embrayage, notamment pour véhicule automobile, du type comportant un mécanisme à couvercle perfectionné.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe rotatif mené est généralement couplé à un arbre de boîte de vitesses.

L'embrayage comporte au moins un mécanisme entraîné en rotation par l'organe menant. Ce mécanisme comprend un couvercle, un diaphragme et un plateau de pression, tous liés en rotation avec l'organe menant.

Afin de coupler les organes rotatifs menant et mené, le diaphragme enserre un disque de friction, lié en rotation avec l'organe rotatif mené, entre le plateau de pression et un plateau de réaction solidaire en rotation du couvercle.

On connaît déjà, dans l'état de la technique, notamment d'après FR-A-2 780 462, un embrayage, notamment pour véhicule automobile, du type comportant un mécanisme comprenant un couvercle, de forme générale de révolution, dans lequel est logé au moins un diaphragme articulé sur le couvercle à l'aide de moyens d'articulation, le diaphragme étant muni d'une extrémité de réaction, radialement extérieure par rapport aux moyens d'articulation, destinée à solliciter un plateau de pression, et d'une extrémité d'action, radialement intérieure par rapport aux moyens d'articulation, destinée à coopérer avec une butée de commande, le couvercle étant muni d'une partie radialement intérieure par rapport aux moyens d'articulation du diaphragme, délimitée par un bord libre du couvercle, cette partie intérieure (30) étant munie de bossages (34) de rigidification.

Le diaphragme est articulé sur le couvercle de façon à pouvoir basculer, notamment dans le cas d'un mécanisme de type poussé, entre une position embrayée, vers laquelle ce diaphragme est rappelé élastiquement, et une position débrayée, vers laquelle ce diaphragme est déplacé par la butée de commande à l'encontre de sa force de rappel.

Dans le cas d'un embrayage transmettant des couples élevés, l'effort d'appui exercé par le diaphragme sur le couvercle peut être relativement important et déformer notablement ce couvercle.

Dans la position embrayée, le plateau de pression est sollicité par une charge axiale du diaphragme. L'effort d'appui appliqué au couvercle déforme alors le couvercle vers l'extérieur d'un espace, délimité par ce couvercle, dans lequel est agencé le plateau de pression.

Dans la position débrayée, l'effort exercé par la butée de commande est transmis au couvercle par l'intermédiaire des moyens d'articulation du diaphragme. Le couvercle subit alors une déformation vers l'intérieur de l'espace dans lequel est agencé le plateau de pression.

Du fait que le diaphragme est porté par le couvercle, la déformation de ce dernier a pour conséquence d'augmenter notablement la course du diaphragme entre ses positions embrayée et débrayée.

On souhaite donc limiter les déformations du couvercle et ainsi les variations de la course du diaphragme pour optimiser la réactivité de la commande de l'embrayage.

Or la limitation des déformations du couvercle par augmentation de son épaisseur requiert de modifier l'outillage de fabrication de ce couvercle, ce qui est généralement coûteux.

L'invention a notamment pour but de limiter les déformations du couvercle du mécanisme d'un embrayage à l'aide de moyens simples ne requérant que des adaptations limitées des moyens classiques de fabrication du mécanisme de l'embrayage.

A cet effet, l'invention a pour objet un embrayage du type précité, où le diaphragme est muni de bossages de rigidification, où les bossages de la partie intérieure du couvercle comprennent des premiers reliefs saillant axialement vers le diaphragme et où les bossages du diaphragme font saillie à l'opposé de la partie intérieure du couvercle, les bossages du diaphragme coïncidant angulairement avec les reliefs de la partie intérieure de façon à s'emboîter entre eux.

On augmente ainsi la rigidification du couvercle tout en offrant un débattement suffisant au diaphragme grâce à l'emboîtement des bossages respectifs.

On notera que ces bossages de rigidification peuvent être agencés sur le couvercle grâce à des moyens classiques facilement adaptables au couvercle de l'invention.

Un embrayage selon l'invention peut en outre comporter l'une ou plusieurs des caractéristiques suivantes :
- les premiers reliefs alternent angulairement avec des seconds reliefs saillant axialement à l'opposé du diaphragme
- la distance entre les moyens d'articulation et le bord libre est supérieure ou égale au tiers de la distance entre les moyens d'articulation et l'extrémité d'action du diaphragme, la partie intérieure du couvercle étant munie de bossages de rigidification.

La partie intérieure du couvercle, de dimension radiale plus importante que dans l'état de la technique, permet l'agencement de bossages de rigidification dans une zone du couvercle habituellement susceptible de se déformer. La déformation du couvercle est donc limitée à l'aide de ces bossages de rigidification supplémentaires.
- la distance entre les moyens d'articulation et le bord libre est supérieure ou égale à la moitié de la distance des moyens d'articulation à l'extrémité d'action du diaphragme ;
- le couvercle est muni de bossages radialement externes par rapport aux moyens d'articulation ;
- les moyens d'articulation du diaphragme comportent un organe d'appui annulaire porté par une série d'éléments axiaux d'articulation fixés sur le couvercle, et des entretoises annulaires de rigidification entourant les éléments axiaux et s'étendant entre l'organe d'appui et le couvercle.

L'invention sera mieux comprise à la lecture de la description qui va suivre, donnée uniquement à titre d'exemple et faite en se référant aux dessins annexés dans lesquels :
- la figure 1 est une vue de face d'un embrayage de véhicule automobile selon un mode possible de réalisation de l'invention ;
- la figure 2 est une vue en coupe axiale de l'embrayage de la figure 1 en position débrayée ;
- la figure 3 est une vue similaire à la figure 2 de l'embrayage de la figure 1 en position embrayée.

On a représenté sur les figures un embrayage, notamment pour véhicule automobile, désigné par la référence générale 10.

L'embrayage 10 comporte un mécanisme 12 comprenant un couvercle 14 de forme générale de révolution. Le mécanisme comporte en outre un diaphragme 15 logé dans le couvercle 14.

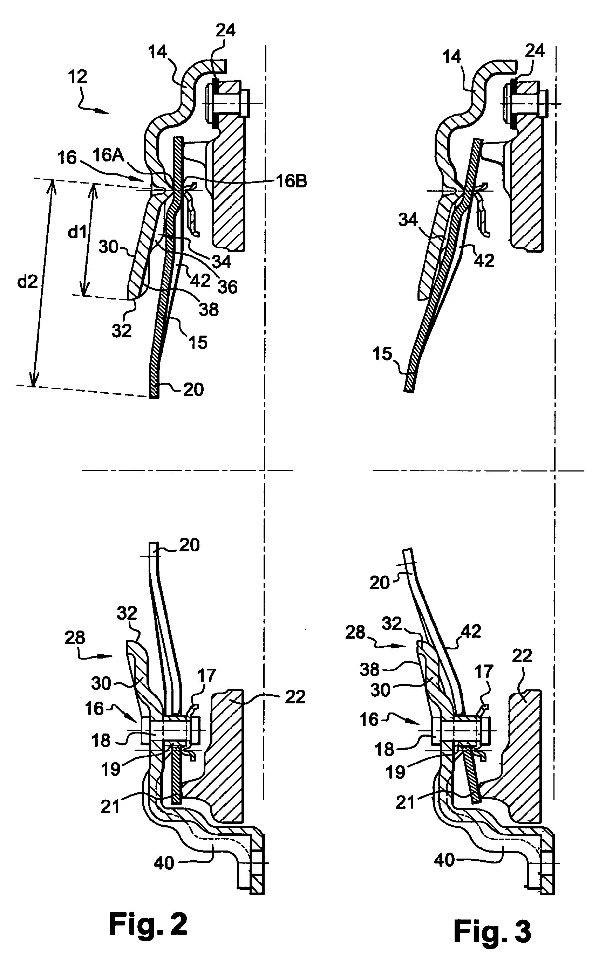

Le diaphragme 15 forme un levier articulé sur le couvercle 14 à l'aide de moyens 16, visibles notamment sur les figures 2 et 3.

Les moyens d'articulation 16 comprennent des première 16A et seconde 16B formes d'appui et d'articulation, agencées sensiblement en vis à vis, entre lesquelles est pincé le diaphragme 15. Ces première 16A et seconde 16B formes d'appui et d'articulation ont des profils bombés assurant un pivotement efficace du diaphragme 15.

La première forme d'appui et d'articulation 16A est ménagée sur le couvercle 14. Dans le mode de réalisation représenté, cette première forme d'appui et d'articulation 16A est formée par une nervure annulaire discontinue ménagée sur le couvercle 14.

La seconde forme d'appui et d'articulation 16B est ménagée sur un organe d'appui annulaire 17 porté par une série d'éléments axiaux d'articulation 18, disposés en couronne et fixés sur le couvercle 14.

Afin d'augmenter la rigidité du couvercle 14, on prévoit des entretoises annulaires 19, entourant les éléments axiaux 18, s'étendant entre l'organe d'appui 17 et le couvercle 14 de façon à former des caissons de rigidification.

Le diaphragme 15 est muni d'une extrémité d'action 20, radialement intérieure par rapport aux moyens d'articulation 16. Cette extrémité d'action 20 est destinée à coopérer avec une butée de commande classique (non représentée).

Le diaphragme 15 est en outre muni d'une extrémité de réaction 21, radialement externe par rapport aux moyens d'articulation 16. Cette extrémité de réaction 21 est destinée à solliciter un plateau de pression 22 de l'embrayage 10, de manière que ce plateau de pression 22 enserre un disque de friction (non représenté) de l'embrayage 10 contre un plateau de réaction (non représenté). Le plateau de pression 22 est lié au couvercle 14 à l'aide de languettes élastiques 24. Ces languettes 24 lient en rotation le plateau de pression 22 et le couvercle 14 tout en permettant un débattement axial du plateau de pression 22.

On notera que le diaphragme 15 forme un levier du premier genre car les moyens d'articulation 16 du diaphragme 15 sont agencés entre les extrémités d'action 20 et de réaction 21 de ce diaphragme 15.

Lorsque le diaphragme 15 est actionné par la butée de commande (position débrayée de la figure 2), l'effort exercé par cette butée de commande est transmis au couvercle.

Lorsque le diaphragme 15 est au repos (position embrayée de la figure 3), le couvercle 14 subit un effort qui est opposé à l'effort exercé par le diaphragme 15 sur le plateau de pression 22.

Afin de limiter les déformations du couvercle 14 sous l'action de la butée de commande ou du diaphragme 15, on prévoit des moyens 28 de rigidification du couvercle 14.

Les moyens de rigidification 28 comportent une partie 30, radialement intérieure par rapport aux moyens d'articulation 16 du diaphragme 15, dite jupe 30. Cette jupe 30 est délimitée par un bord libre 32 du couvercle 14, tel que la distance d1 entre les moyens d'articulation 16 et ce bord libre 32 est supérieure ou égale au tiers de la distance d2 entre les moyens d'articulation 16 et l'extrémité d'action 20 du diaphragme 15 (voir figure 2).

De préférence, cette distance d1 entre les moyens d'articulation 16 et le bord libre 32 est supérieure ou égale à la moitié de la distance d2 entre les moyens d'articulation 16 et l'extrémité d'action 20 du diaphragme 15.

Ainsi, la jupe 30 est suffisamment étendue pour recevoir des bossages 34 de rigidification.

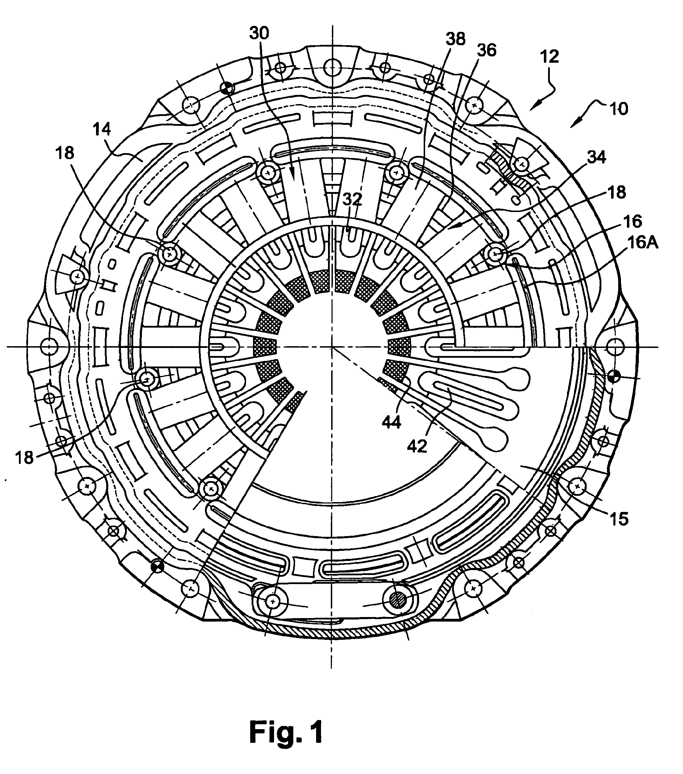

Comme on peut le voir notamment sur les figures 1 et 2, les bossages 34, qui s'étendent de préférence suivant des directions générales radiales, comprennent des premiers reliefs 36, faisant saillie axialement vers le diaphragme 15, alternant angulairement avec des seconds reliefs 38, faisant saillie axialement à l'opposé du diaphragme 15.

De préférence, le couvercle 14 est également muni de bossages de rigidification 40 radialement externes par rapport aux moyens d'articulation 16.

On notera que le diaphragme 15 est généralement muni de bossages de rigidification 42. Chaque bossage 42 du diaphragme 15 est agencé sur un doigt 44 du diaphragme 15, et fait saillie à l'opposé de la jupe 30 (voir notamment figure 2).

Les bossages 42 du diaphragme coïncident angulairement avec les reliefs 38 de la jupe 30, de façon à s'emboîter entre eux en position embrayée, comme cela est visible sur la figure 3. Ainsi, l'encombrement des bossages 34 de la jupe 30 ne gêne pas les déplacements du diaphragme 15.

## Revendications

1. Embrayage (10), notamment pour véhicule automobile, du type comportant un mécanisme (12) comprenant un couvercle (14), de forme générale de révolution, dans lequel est logé au moins un diaphragme (15) articulé sur le couvercle à l'aide de moyens d'articulation (16), le diaphragme (15) étant muni d'une extrémité de réaction (21), radialement extérieure par rapport aux moyens d'articulation (16), destinée à solliciter un plateau de pression (22), et d'une extrémité d'action (20), radialement intérieure par rapport aux moyens d'articulation (16), destinée à coopérer avec une butée de commande, le couvercle (14) étant muni d'une partie (30) radialement intérieure par rapport aux moyens d'articulation (16) du diaphragme (15), délimitée par un bord libre (32) du couvercle (14), cette partie intérieure (30) étant munie de bossages (34) de rigidification **caractérisé en ce que** le diaphragme (15) est muni de bossages (42) de rigidification, **en ce que** les bossages (34) de la partie intérieure (30) du couvercle comprennent des premiers reliefs (36) saillant axialement vers le diaphragme (15) et **en ce que** les bossages (42) du diaphragme (15) font saillie à l'opposé de la partie intérieure (30) du couvercle (14), les bossages (42) du diaphragme (15) coïncidant angulairement avec les reliefs (36) de la partie intérieure (30) de façon à s'emboîter entre eux.

2. Embrayage (10) selon la revendication 1, **caractérisé en ce que** les premiers reliefs (36) alternent angulairement avec des seconds reliefs (38) saillant axialement à l'opposé du diaphragme (15).

3. Embrayage (10) selon les revendications 1 et 2, **caractérisé en ce que** la distance (d1) entre les moyens d'articulation (16) et le bord libro (32) est supérieure ou égale au tiers de la distance (d2) entre les moyens d'articulation (16) et l'extrémité d'action (20) du diaphragme (15), la partie intérieure (30) du couvercle (14) étant munie de bossages (34) de rigidification.

4. Embrayage (10) selon l'une quelconque des revendications précédentes, **caractérisé en ce que** la distance (d1) entre les moyens d'articulation (16) et le bord libre (32) est supérieure ou égale à la moitié de la distance (d2) des moyens d'articulation (16) à l'extrémité d'action (20) du diaphragme (15).

5. Embrayage (10) selon l'une quelconque des revendications précédentes, **caractérisé en ce que** le couvercle (14) est muni de bossages (40) radialement externes par rapport aux moyens d'articulation (16).

6. Embrayage (10) selon l'une quelconque des revendications précédentes, **caractérisé en ce que** les moyens d'articulation (16) du diaphragme (15) comportent un organe d'appui (17) annulaire porté par une série d'éléments axiaux d'articulation (18) fixés sur le couvercle (14), et des entretoises annulaires (19) de rigidification entourant les éléments axiaux (18) et s'étendant entre l'organe d'appui (17) et le couvercle (14).

## Claims

1. Clutch (10), in particular for a motor vehicle, of the type comprising a mechanism (12) comprising a cover (14) with a form generally of revolution, in which there is accommodated at least one diaphragm (15) which is articulated on the cover by articulation means (16), the diaphragm (15) being provided with a reaction end (21) which is radially external relative to the articulation means (16), and is designed to thrust a pressure plate (22), and an action end (20), which is radially internal relative to the articulation means (16), and is designed to cooperate with a control stop, the cover (14) being provided with a part (30) which is radially internal relative to the articulation means (16) of the diaphragm (15), and is delimited by a free edge (32) of the cover (14), this internal part (30) being provided with strengthening bosses (34), **characterised in that** the diaphragm (15) is provided with strengthening bosses (42), **in that** the bosses (34) of the internal part (30) of the cover comprise first reliefs (36) which project axially towards the diaphragm (15) and **in that** the bosses (42) of the diaphragm (15) project opposite the internal part (30) of the cover (14), the bosses (42) of the diaphragm (15) coinciding angularly with the reliefs (36) of the internal part (30) such as to fit between them.

2. Clutch (10) according to claim 1, **characterised in that** the first reliefs (36) alternate angularly with second reliefs (38) which project axially opposite the diaphragm (15).

3. Clutch (10) according to claims 1 and 2, **characterised in that** the distance (d1) between the articulation means (16) and the free edge (32) is the same as, or more than, a third of the distance (d2) between the articulation means (16) and the action end (20) of the diaphragm (15), the internal part (30) of the cover (14) being provided with strengthening bosses (34).

4. Clutch (10) according to any one of the preceding claims, **characterised in that** the distance (d1) between the articulation means (16) and the free edge (32) is the same as, or more than, half of the distance (d2) between the articulation means (16) and the action end (20) of the diaphragm (15).

5. Clutch (10) according to any one of the preceding claims, **characterised in that** the cover (14) is provided with bosses (40) which are radially external relative to the articulation means (16).

6. Clutch (10) according to any one of the preceding claims, **characterised in that** the articulation means (16) of the diaphragm (15) comprise an annular support unit (17) which is supported by a series of axial articulation elements (18) which are secured on the cover (14), and annular strengthening braces (19) which surround the axial elements (18) and extend between the support unit (17) and the cover (14).

## Patentansprüche

1. Kupplung (10), insbesondere für Kraftfahrzeuge, umfassend einen Mechanismus (12), welcher einen Deckel (14) mit einer umlaufenden Gesamtform aufweist, in dem mindestens eine mit Hilfe von Gelenkmitteln (16) auf dem Deckel angelenkte Membranfeder (15) angeordnet ist, wobei die Membranfeder (15) mit einem radial außerhalb der Gelenkmittel (16) befindlichen Reaktions-Endstück (21), das dazu bestimmt ist, eine Druckplatte (22) zu beaufschlagen, sowie mit einem radial innerhalb der Gelenkmittel (16) befindlichen Aktions-Endstück (20) versehen ist, das dazu bestimmt ist, mit einem Steuerlager zusammenzuwirken, wobei der Deckel (14) mit einem radial innerhalb der Gelenkmittel (16) der Membranfeder (15) befindlichen Teil (30) versehen ist, der durch einen freien Rand (32) des Deckels (14) begrenzt ist, wobei dieser innere Teil (30) mit Versteifungsvorsprüngen (34) ausgestattet ist, **dadurch gekennzeichnet, dass** die Membranfeder (15) mit Versteifungsvorsprüngen (42) versehen ist, dass die Vorsprüngen (34) des inneren Teils (30) des Deckels erste Reliefs (36) umfassen, die axial in Richtung zur Membranfeder (15) vorstehen, und dass die Vorsprünge (42) der Membranfeder (15) eine Auskragung auf der vom inneren Teil (30) des Deckels (14) abgewandten Seite bilden, wobei sich die Vorsprünge (42) der Membranfeder (15) winkelmäßig mit den Reliefs (36) des inneren Teils (30) decken, so dass sie sich ineinander einfügen.

2. Kupplung (10) nach Anspruch 1, **dadurch gekennzeichnet, dass** die ersten Reliefs (36) sich winkelmäßig mit zweiten Reliefs (38) abwechseln, die auf der von der Membranfeder (15) abgewandten Seite axial vorstehen.

3. Kupplung (10) nach den Ansprüchen 1 und 2, **dadurch gekennzeichnet, dass** der Abstand (d1) zwischen den Gelenkmitteln (16) und dem freien Rand (32) größer als oder gleich einem Drittel der Entfernung (d2) zwischen den Gelenkmitteln (16) und dem Aktions-Endstück (20) der Membranfeder (15) ist, wobei der innere Teil (30) des Deckels (14) mit Versteifungsvorsprüngen (34) ausgestattet ist.

4. Kupplung (10) nach einem der vorherigen Ansprüche, **dadurch gekennzeichnet, dass** der Abstand (d1) zwischen den Gelenkmitteln (16) und dem freien Rand (32) größer als oder gleich der Hälfte der Entfernung (d2) der Gelenkmittel (16) von dem Aktions-Endstück (20) der Membranfeder (15) ist.

5. Kupplung (10) nach einem der vorherigen Ansprüche, **dadurch gekennzeichnet, dass** der Deckel (14) mit radial außerhalb der Gelenkmittel (16) befindlichen Vorsprüngen (40) versehen ist.

6. Kupplung (10) nach einem der vorherigen Ansprüche, **dadurch ge**- **kennzeichnet,** dass die Gelenkmittel (16) der Membranfeder (15) ein ringförmiges Auflageorgan (17) umfassen, das von einer Reihe von an dem Deckel befestigten axialen Gelenkelementen (18) getragen wird, und ringförmige Versteifungs-Abstandshalter (19), die die axialen Elemente (18) umgeben und sich zwischen dem Auflageorgan (17) und dem Deckel 814) erstrecken.
